(19) Europäisches Patentamt
European Patent Office
Office européen des brevets

(11) Veröffentlichungsnummer: **0 066 781**
**A2**

(12) # EUROPÄISCHE PATENTANMELDUNG

(21) Anmeldenummer: **82104576.2**

(51) Int. Cl.³: **C 09 B 31/057**, C 09 B 31/072

(22) Anmeldetag: **26.05.82**

(30) Priorität: **06.06.81 DE 3122636**

(43) Veröffentlichungstag der Anmeldung: **15.12.82**
**Patentblatt 82/50**

(84) Benannte Vertragsstaaten: **CH DE FR GB IT LI**

(71) Anmelder: **BASF Aktiengesellschaft,**
***Carl-Bosch-Strasse 38, D-6700 Ludwigshafen (DE)***

(72) Erfinder: **Hansen, Guenter, Dr., Alwin-Mittasch-Platz 8, D-6700 Ludwigshafen (DE)**
Erfinder: **Thomas, Michael, Dr., Prager Strasse 31, D-6700 Ludwigshafen (DE)**
Erfinder: **Zeidler, Georg, Mutterstadter Strasse 7, D-6701 Dannstadt-Schauernheim (DE)**

(54) **Sulfonsäuregruppenhaltige Disazofarbstoffe.**

(57) Die Erfindung betrifft Verbindungen, die in Form der freien Säuren der allgemeinen Formel I

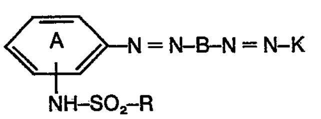

I,

entsprechen, in der

R ein aliphatischer oder aromatischer Rest,
B ein Rest der Formel

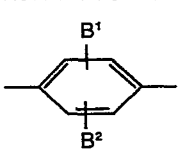

oder

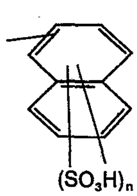

und

K der Rest einer Kupplungskomponente der Naphthalinreihe sind, wobei
n die Zahlen 0, 1 oder 2,
$B^1$ Methyl, Ethyl, Methoxy oder Ethoxy,
$B^2$ Wasserstoff, Methyl, Ethyl, Methoxy oder Ethoxy bedeuten und der Ring A und der für B stehende Naphthylenring noch weiter substituiert sein können.

Die erfindungsgemäßen Verbindungen eignen sich sehr gut zum Färben stickstoffhaltiger Fasern sowie von Leder und Papier.

EP 0 066 781 A2

## Sulfonsäuregruppenhaltige Disazofarbstoffe

Die Erfindung betrifft Verbindungen, die in Form der freien Säuren der allgemeinen Formel I

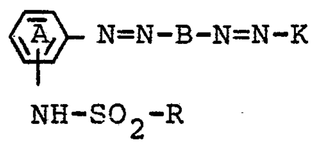 I ,

entsprechen, in der

R ein aliphatischer oder aromatischer Rest,

B ein Rest der Formel

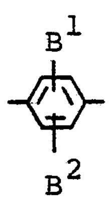 oder 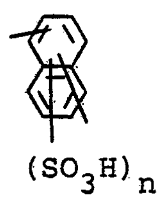 und

K der Rest einer Kupplungskomponente der Naphthalinreihe sind, wobei

n die Zahlen 0, 1 oder 2,

$B^1$ Methyl, Ethyl, Methoxy oder Ethoxy,

$B^2$ Wasserstoff, Methyl, Ethyl, Methoxy oder Ethoxy bedeuten und der Ring A und der für B stehende Naphthylenring noch weiter substituiert sein können.

Bg/P

Der Ring A kann beispielsweise noch durch Methyl, Ethyl, Methoxy, Ethoxy, Chlor, Brom, Hydroxy oder Hydroxysulfonyl substituiert sein, für den Naphthylenring B kommen als Substituenten beispielsweise Hydroxy, Methoxy oder Ethoxy in Betracht.

Reste R sind beispielsweise gegebenenfalls substituiertes Alkyl, Alkenyl, Aralkyl, Cycloalkyl oder Aryl oder ein substituierter Aminrest.

Die Reste K der Kupplungskomponenten entsprechen z. B. den Formeln

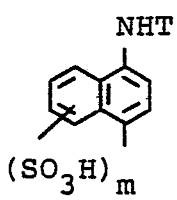 ,

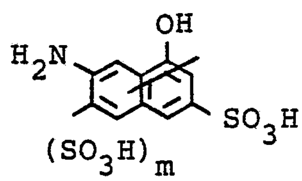

oder

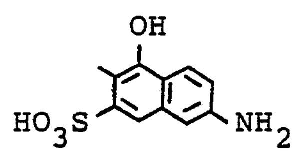 ,

in denen

m 0 oder 1 und

T $C_1$- bis $C_4$-Alkyl, Benzyl, Phenylethyl oder gegebenenfalls durch Alkyl, Alkoxy oder Hydroxysulfonyl substituiertes Phenyl sind.

Die Herstellung der Verbindungen der Formel I erfolgt nach an sich bekannten Methoden, beispielsweise durch Umsetzung eines Diazoniumsalzes von Aminen der Formel

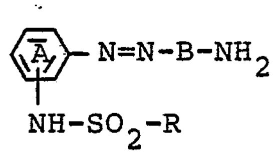

mit einer Kupplungskomponente der Formel

H-K.

Einzelheiten der Reaktionen können den Beispielen entnommen werden, in denen sich Angaben über Teile und Prozente, sofern nicht anders vermerkt, auf das Gewicht beziehen.

Die Verbindungen der Formel I eignen sich vorzüglich zum Färben stickstoffhaltiger Fasern sowie von Leder und Papier. Besonders geeignet sind sie für synthetische Polyamide. Die violetten bis schwarzen Färbungen zeichnen sich im allgemeinen durch gute Echtheiten, wie Licht- und Naßechtheiten aus.

Von besonderer Bedeutung sind Verbindungen der Formel I, bei denen B ein Rest der Formel

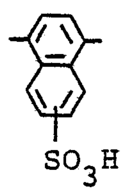

und K ein Rest der Formel

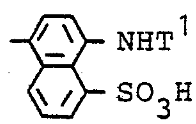

sind, wobei $T^1$ gegebenenfalls durch Methyl oder Methoxy substituiertes Phenyl ist.

Bevorzugte Reste R sind z.B.: Ethyl, n- und i-Propyl, Methylamino, Dimethylamino, Diethylamino, Dibutylamino, Pyrrolidino, Piperidino, Morpholino oder N-Methylpiperazino und insbesondere Methyl.

Bevorzugte Substituenten für den Ring A sind Methyl, Methoxy, Chlor und Hydroxysulfonyl.

Beispiel 1

18,6 Teile 3-Methylsulfonylamino-anilin werden unter Rühren in 200 Teilen Wasser mit 50 Volumenteilen 5-n-Salzsäure gelöst und nach Zugabe von 100 Teilen Eis mit einer wäßrigen Lösung von 7 Teilen Natriumnitrit versetzt. Nach etwa 30 Minuten bei 0 - 5 °C ist die Diazotierung beendet. Man entfernt mit Amidosulfonsäure überschüssiges Nitrit und fügt zu der klaren Diazoniumsalzlösung im Verlauf von 30 Minuten eine Lösung von 22,3 Teilen 1-Naphthylamin-6-sulfonsäure in 200 Teilen Wasser und 8 Teilen 50 %iger Natriumhydroxydlösung zu. Nach beendeter Kupplung wird der Monoazofarbstoff mit Natriumhydroxydlösung bei einem pH-Wert von 6 - 7 gelöst und nach Zufügen einer wäßrigen Lösung von 7 Teilen Natriumnitrit unter Rühren zu einer Mischung von 150 Teilen Eis, 100 Teilen Wasser und 80 Volumenteilen 5-n-Salzsäure gegeben. Die Diazotierung ist nach ungefähr 4 Stunden bei 10 - 15 °C beendet. Man entfernt das überschüssige Nitrit mit Amidosulfonsäure und tropft die Suspension des Diazoniumsalzes bei 10 bis 15 °C in eine neutrale Lösung von 30,8 Teilen 1-Phenylaminonaphthalin-8-sulfosäure in 400 Teilen Wasser ein. Gleichzeitig wird der pH-Wert des Kupplungsgemisches mit Natriumacetlösung bei 3 - 4 gehalten.
Nach dem Rühren über Nacht wird der Ansatz mit verdünnter Natriumhydroxydlösung auf einen pH-Wert von 7 - 8 eingestellt, abgesaugt, mit wenig Wasser nachgewaschen und unter vermindertem Druck bei 60 °C getrocknet.

Man erhält ein dunkles Pulver, das der Formel

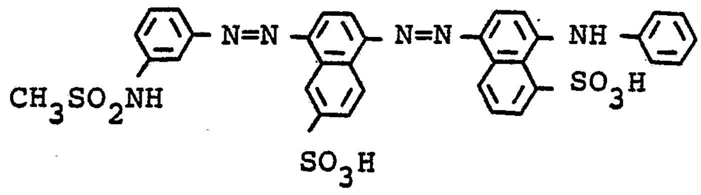

entspricht und auf Polyamid 6 und Leder rotstichig dunkelblaue Färbungen von guten Licht- und Naßechtheiten erzeugt.

Die in der nachfolgenden Tabelle aufgeführten Farbstoffe lassen sich analog Beispiel 1 darstellen und ergeben Färbungen in Blaunuancen, die ähnliche Eigenschaften haben.

D-N=N-B-N=N-K

| Beispiel | D | B | K |
|---|---|---|---|
| 2 | 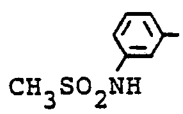 | 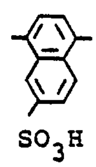 | 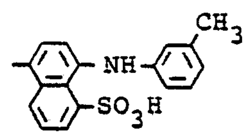 |
| 3 | 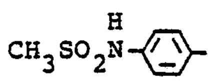 | " | " |
| 4 | 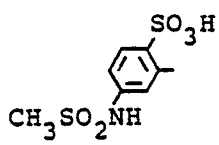 | 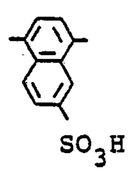 | " |
| 5 | 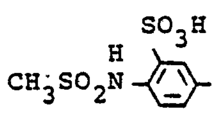 | " | " |
| 6 | 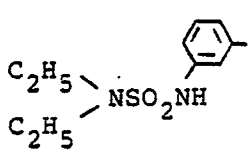 | 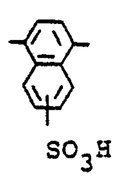 | 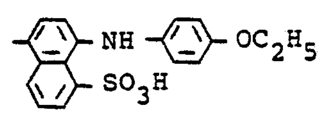 |
| 7 | 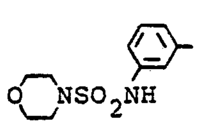 | " | 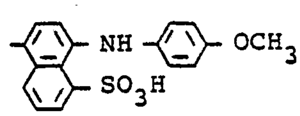 |

| Beispiel | D | B | K |
|---|---|---|---|
| 8 | 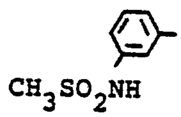 | 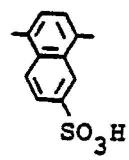 | 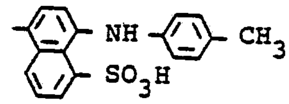 |
| 9 | 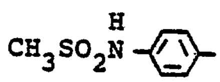 | " | " |
| 10 | 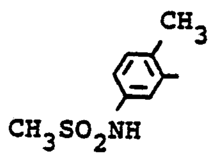 | 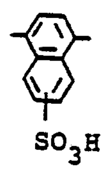 | 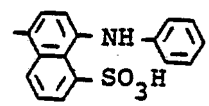 |
| 11 | 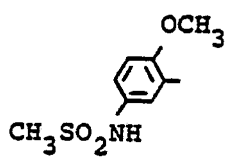 | " | " |
| 12 | 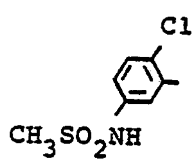 | " | " |
| 13 | 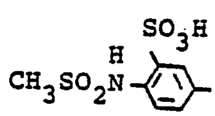 | " | " |
| 14 | 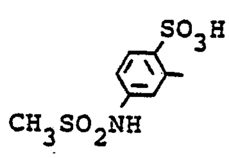 | " | 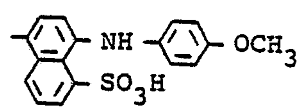 |

| Bei-spiel | D | B | K |
|---|---|---|---|
| 15 | 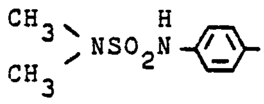 | 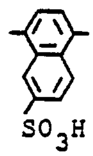 | 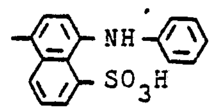 |
| 16 | 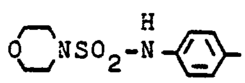 | " | " |
| 17 | 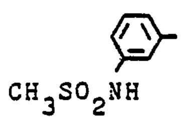 | " | 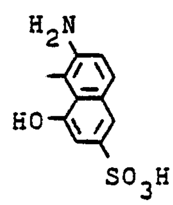 |
| 18 | 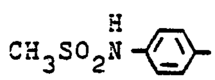 | " | " |
| 19 | 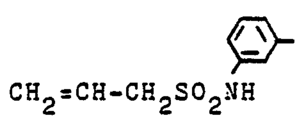 | " | " |
| 20 | 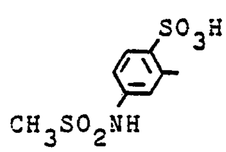 | 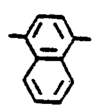 | 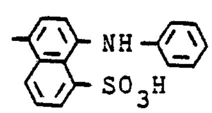 |
| 21 | 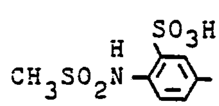 | " | 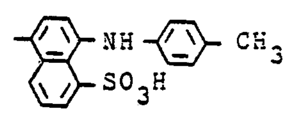 |

| Beispiel | D | B | K | |
|---|---|---|---|---|
| 22 | 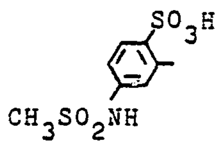 | 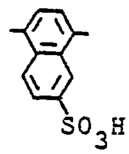 | 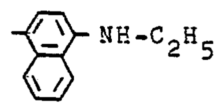 | x) |
| 23 | 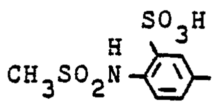 | 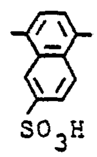 | " | x) |
| 24 | " | " | 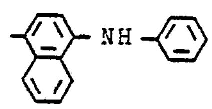 | x) |
| 25 | 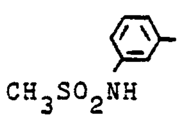 | " | 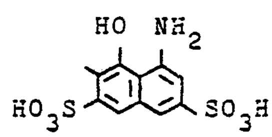 | |

x) K wird in verdünnter Salzsäure gelöst

Beispiel 26

18,6 Teile 3-Methylsulfonylamino-anilin werden, wie in Beispiel 1 beschrieben, diazotiert. Zu der klaren, nitritfreien Diazoniumsalzlösung fügt man im Verlauf von 30 Minuten eine Lösung von 15,3 Teilen 1-Amino-2,5-dimethoxybenzol in 100 Teilen Wasser und 22 Volumenteilen 5-n-Salzsäure zu und hält gleichzeitig den pH-Wert des Reaktionsgemisches mit einer wäßrigen Natriumacetatlösung bei 3 bis 4. Nach dem Rühren über Nacht wird der Ansatz durch Zugabe verdünnter Natriumhydroxydlösung bei einem pH-Wert von etwa 13 gelöst und nach Zufügen einer wäßrigen Lösung von 7 Teilen Natriumnitrit zu einer Mischung von 150 Teilen Eis, 150 Teilen Wasser und 100 Volumenteilen 5-n-Salzsäure gegeben. Die Diazotierung ist nach ungefähr 4 Stunden bei 10 - 15 °C beendet. Man entfernt überschüssiges Nitrit mit Amidosulfonsäure und tropft zu der Lösung des Diazoniumsalzes eine neutrale Lösung von 23,9 Teilen 2-Amino-8-hydroxynaphthalin-6-sulfonsäure in 300 Teilen Wasser. Gleichzeitig wird der pH-Wert des Kupplungsgemisches durch Zusetzen von Natriumacetat bei 3 - 4 gehalten.

Nach dem Rühren über Nacht wird der Ansatz mit verdünnter Natriumhydroxydlösung auf einen pH-Wert von 7 - 8 eingestellt, abgesaugt, mit einer 5 %igen Natriumchloridlösung nachgewaschen und unter vermindertem Druck bei 60 °C getrocknet. Der Farbstoff entspricht der Formel

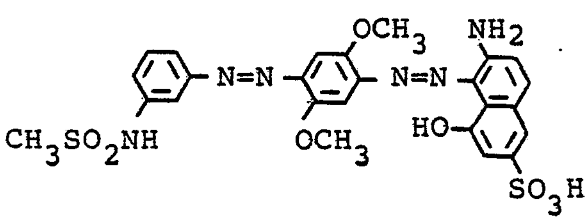

und färbt Polyamid wie auch Leder in dunkelblauen Tönen von guten Licht- und Naßechtheiten.

Analog dem Beispiel 26 können die in der nachfolgenden Tabelle aufgeführten Farbstoffe hergestellt werden.

D-N=N-B-N=N-K

| Beispiel | D | B | K |
|---|---|---|---|
| 27 | 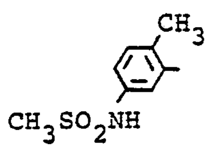 | 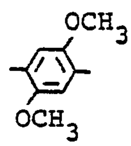 | 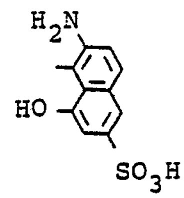 |
| 28 | 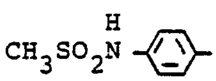 | " | " |
| 29 | 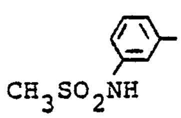 | " | 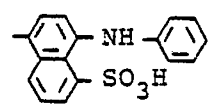 |
| 30 | 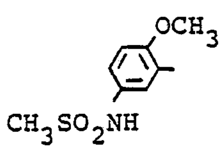 | " | 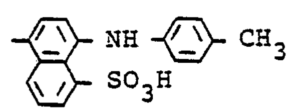 |
| 31 | 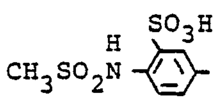 | " | " |
| 32 | 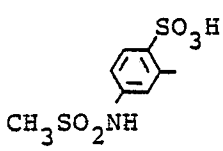 | " | " |

Beispiel 33

Zu einer in üblicher Weise hergestellten Diazoniumsalzsuspension aus 31,9 Teilen 1-Amino-8-hydroxynaphthalin-3,6-disulfonsäure, die man mit Natriumacetat auf einen pH-Wert von ca. 4 eingestellt hat, läßt man unter Rühren eine neutrale Lösung von 30,8 Teilen 1-Phenylamino-naphthalin-8-sulfonsäure in 400 Teilen Wasser zufließen. Nach dem Rühren über Nacht ist die Kupplung beendet. Man saugt ab, löst das Filtergut in 700 Teilen Wasser und fügt eine nach Beispiel 1 zubereitete Diazoniumsalzlösung aus 18,6 Teilen 3-Methyl-sulfonylamino-anilin zu. Anschließend wird das Reaktionsgemisch mit verdünnter Natriumacetatlösung auf einen pH-Wert von 4 eingestellt. Nach 12stündigem Rühren bei Raumtemperatur wird der Farbstoff abgesaugt und bei 60 °C unter vermindertem Druck getrocknet. Man erhält ein schwarzes Pulver der Formel

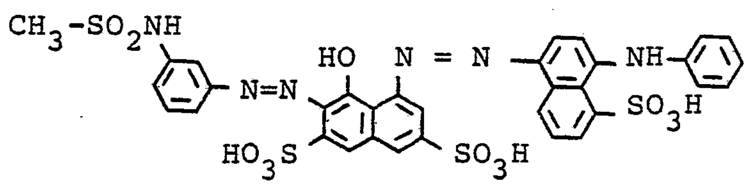

,

das Leder in satten Schwarztönen färbt.

Die in der nachfolgenden Tabelle aufgeführten Farbstoffe lassen sich analog dem Beispiel 33 herstellen.

D-N=N-B-N=N-K

| Beispiel | D | B | K |
|---|---|---|---|
| 34 | 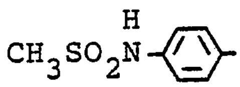 | 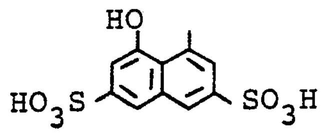 | 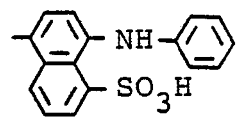 |
| 35 | 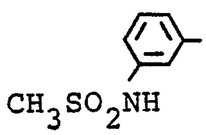 | " | 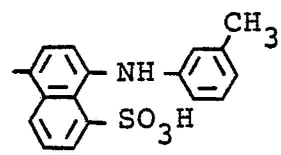 |
| 36 | " | 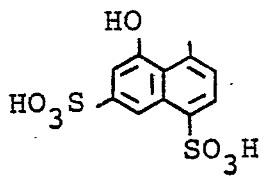 | 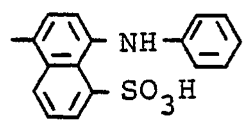 |
| 37 | 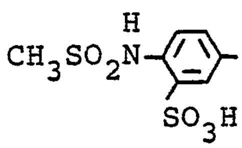 | 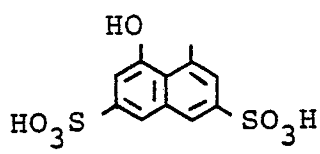 | " |
| 38 | 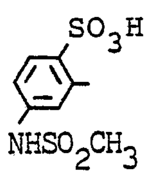 | 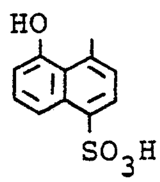 | " |
| 39 | 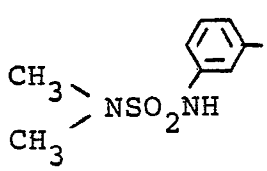 | 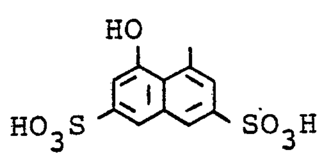 | " |
| 40 | 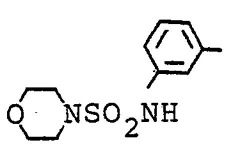 | " | " |

## Patentansprüche

1. Sulfonsäuregruppenhaltige Diazofarbstoffe die in Form der freien Säuren der allgemeinen Formel I

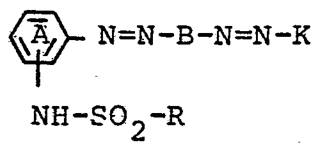 I ,

entsprechen, in der

R ein aliphatischer oder aromatischer Rest,

B ein Rest der Formel

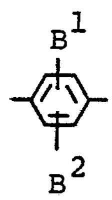 oder 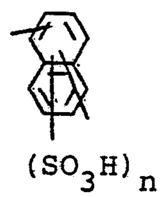 und

K der Rest einer Kupplungskomponente der Naphthalinreihe sind, wobei

n die Zahlen 0, 1 oder 2,

$B^1$ Methyl, Ethyl, Methoxy oder Ethoxy,

$B^2$ Wasserstoff, Methyl, Ethyl, Methoxy oder Ethoxy bedeuten und der Ring A und der für B stehende Naphthylenring noch weiter substituiert sein können.

2. Farbstoffe gemäß Anspruch 1, wobei R $C_1$- bis $C_4$-Alkyl ist.

3. Farbstoffe gemäß Anspruch 1, wobei R Methyl ist.

4. Farbstoffe gemäß Anspruch 1, wobei B der Rest der Formel

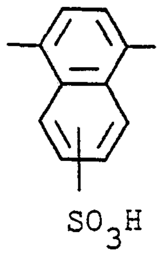

ist, bei dem die $SO_3H$-Gruppe in 6- oder 7-Stellung steht.

5. Farbstoffe gemäß Anspruch 1, wobei K ein Rest der Formel

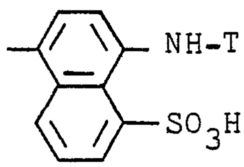

und T Phenyl oder Tolyl sind.

6. Farbstoffe gemäß Anspruch 1 der Formel

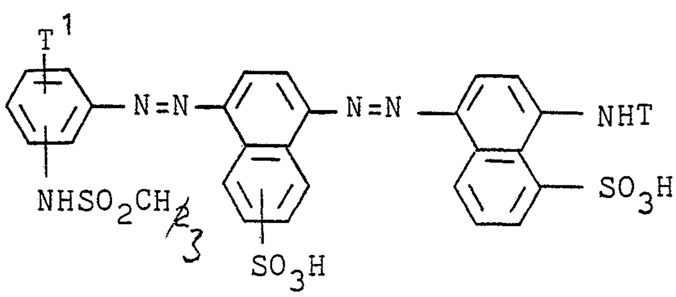

,

in der $T^1$ Wasserstoff oder Methyl ist und T die für Anspruch 5 angegebene Bedeutung hat.

7. Verwendung der Verbindungen gemäß Anspruch 1 zum Färben stickstoffhaltiger Fasern, von Leder oder Papier.